Europäisches Patentamt

European Patent Office

Office européen des brevets

(19)

(11) Publication number: **0 289 688**
**A1**

## EUROPEAN PATENT APPLICATION

(21) Application number: 87830166.2

(22) Date of filing: 06.05.87

(51) Int. Cl.⁴: **G03B 37/00** , **G03B 1/48**

(43) Date of publication of application:
**09.11.88 Bulletin 88/45**

(84) Designated Contracting States:
**AT BE CH DE ES FR GB GR LI LU NL SE**

(71) Applicant: **A.R.C.O 2 S.r.l.**
**Viale Tito Labieno 27**
**I-00174 Roma(IT)**

(72) Inventor: **Vinciguerra, Aldo**
**Viale Tito Labieno, 27**
**I-00174 Roma(IT)**

(74) Representative: **Sarpi, Maurizio**
**Studio FERRARIO Via Collina, 36**
**I-00187 Roma(IT)**

(54) Motion-picture system and masking means providing photograms of particular size during filming.

(57) A motion-picture system is disclosed providing a full-size photogram (Super 35) be reduced by a suitable masking means in order to obtain a negative having the same width and a reduced height between 13 and 13,5 mm. Standard sizes 1:1,33; 1:1,66 and 1:1,85 can be provided by such negative of the above size during printing by projection optics. In the same way anamorphic-size images can be provided by the same negative by using anamorphic lenses during printing.

As according to the invention the take is carried out only with common lenses, wide-angle lenses up to 14 mm can be used, thus allowing pan shots without any danger of distortion also with anamorphic-size printed positives.

FIG. 1

Xerox Copy Centre

# MOTION-PICTURE SYSTEM AND MASKING MEANS PROVIDING PHOTOGRAMS OF PARTICULAR SIZE DURING FILMING

This invention relates generally to a motion-picture system and means providing a photogram of particular size from a 35 mm film by which all standard sizes normally used in the television, cinematograph, anamorphic fields can be provided by means of projection optics during printing.

More particurlarly, an object of this invention is a motion-picture system and masking means to provide by a common 35 mm cinecamera an exposed negative of particular size using the whole width of the film, from which either positives or intermediate negatives of standard sizes, i.e. 1:1,33; 1:1,66; 1:1,85 and anamorphic size, can be provided during printing.

According to a feature of this system the negative is obtained by using exclusively common lenses (wide-angle lenses included) during filming, while anamorphic lenses are used only during printing, when prints to be projected by any anamorphic projector have to be provided.

Of course the perspective effects vary according to the size, however it should be appreciated that by filming with wide-angle lenses in anamorphic size the director can enlarge the side spaces so as to achieve the same perspective that the audience would have with the direct view.

It is known that the most used professional film is the 35 mm standard, which is perforated on both sides, while the surface between perforations has the size 24,9 X 19 mm. This size is called full-size or SUPER 35.

Up to 1952 cinematograph industry used film and equipment having well defined characteristics: film was always standard, i.e. 35 mm wide, and the ratio width/height was 1,33/1. Cinecameras had a drive mechanism engaging four perforations.

Since 1952 many new motion-picture systems different from standard have been introduced, said systems using several film sizes of different width/height ratio and other types of sounds tracks. Among others, the motion-picture systems of most commercial use is the panoramic screen system by Twentieth Century Fox known under the Trademark "Cinemascope". This system makes use of only one film and an anamorphic lens mounted in a 35 mm cinecamera. The anamorphic lens compresses (or squeezes) horizontally the image of a photogram. A similar type of lens is used in the projector in order to eliminate the squeezing of the image, thus restoring the latter to its original size. The copies of films in Cinemascope are printed on a 35 mm film having, however, smaller perforations than standard films in order to allow four magnetic sound tracks needed for stereophonic effect to be applied.

Width/height ratio of the projected images of the prints with magnetic sound track is 2,55/1.

A modification of the anamorphic projection is the motion-picture system by RKO Pictures known under the Trademark Superscope 235. Superscope 235 is accomplished with a common 35 mm cinecamera. Photogram occupies all the surface of film between perforations. The view-finder of the cinecamera is masked both at the upper and lower side so as to have the same size of Cinemascope.

The printing of copies is carried out by means of anamorphic lenses so that copies can be projected by means of any projector for Cinemascope.

Motion-picture system of Technicolor Corp. introduced in 1964 makes use of a 35 mm cinecamera, the drive mechanism of which engages two perforations.

This makes the picture the half of a common 35 mm picture, i.e. with a ratio of 2,55/1, the same as Cinemascope and Panavision 35 (but with compression ratio 2/1), although the image is taken with common spheric lenses. Then the image is vertically elongated when it is printed. The resulting positive has a 35 mm standard size with a side anamorphic compression of 2:1, i.e. the standard compression of Cinemascope and Panavision 35.

All these motion-picture systems and others like Todd AO using non-standard films have the serious drawback that they cannot use the negative obtained from the take to print a positive in which the size, i.e. the width/height ratio of the image, is different from that of the negative itself. As almost all sizes are not compatible to one another, several problems arise when the film is thrown on the market.

Considering for example a TV-production for which the projection to panoramic cinematograph screens is provided, it is presently needed to carry out filming twice with different films and lenses in order to avoid the image be reduced to a horizontally elongated central band of the telescreen as it is the case when a film taken for panoramic screen is projected. This, of course, requires a longer working time and greater investment.

An object of this invention is to avoid such drawbacks by providing a negative of one size from which positives of several standard sizes for cinematograph and TV purposes and of the anamorphic size as well can be provided by printing by means of projection optics.

This is achieved by providing from the negative of full-size (socalled Super 35), i.e. 24,9 X 19 mm, a photogram having the whole width of 24,9 mm but a reduced height in the range between 13 and 13,5 mm.

On the ground of experiences it was found that it is possible, from a negative of this size developed and printed as usual by means of projection optics, to provide the three standard sizes covering both cinematograph and television projection requirements, i.e. 1:1,33; 1:1,66; 1:1,85 and the anamorphic size 1:2,35 as well.

It should be noted that all the above mentioned standard sizes have the same side dimensions as the anamorphic size, whereby the anamorphic take falls within such sizes. This allows the same negative to be used and standard as well as anamorphic positives to be provided without quality loss.

It is important to point out that the described motion-picture system allows pan shots to be carried out which are quite unusual in the anamorphic standard.

As the use of anamorphic lenses is limited to the printing step, all available wide-angle lenses up to 14 mm can be used during the take without any deformation. As known by the skilled in the art, it is not possible to use lenses beyond 28 mm by technical reasons if anamorphic lenses are used during the take.

One of the peculiar features of the invention is that of making the upper side of all existing sizes coincident with the upper side of the cinecamera frame having size 24,9 X 13 mm. This solution solves and simplifies many problems, in particular those of the field check during the take.

Still according to another feature this invention allows the size to be changed from 35 to 70 mm with a quality loss of only 25%.

To achieve the desired results this invention provides:

-the use in the 35 mm cinecamera of masking means in the form of a slide having a particular width/height ratio appropriately designed for reducing the usable portion of the photogram to the desired size;

-the modification of the reflex view finder so that the image has the same size of the masking slide.

Further features and advantages of this invention will be more readily apparent with reference to the accompanying drawing, in which:

Fig. 1 shows the photogram of standard size (full-size or Super 35) with the image composition area according to the invention;

Fig. 2 shows a comparison between the common sizes and the size according to the invention;

Fig. 3 shows a photogram having a size according to the invention for TV-application;

Fig. 4 shows a photogram of the Techniscope size compared with the image composition area according to the invention which is defined for the anamorphic size.

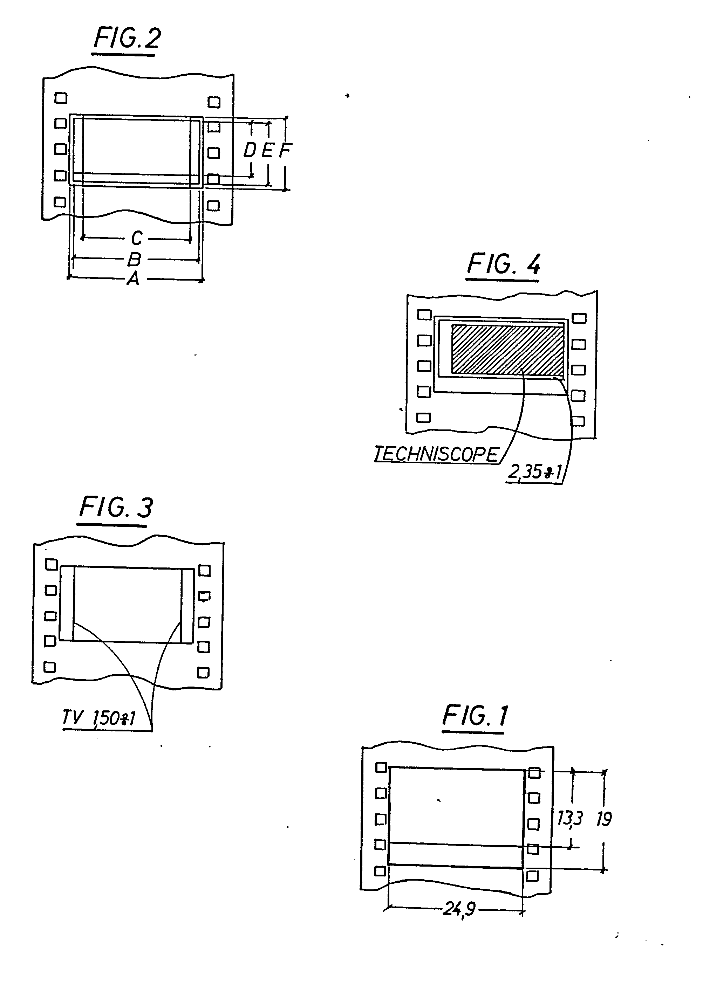

With reference to Fig. 2 the size of the photogram has the whole available width between perforations, i.e. the same width of 24,9 mm as the full-size. However, its height is narrowed to the range between 13 and 13,5 mm, preferably 13,3. This size having a ratio 1:1,92 was found besides adapted to meet the requirements of the panoramic screen, also able to cover all ratio used today, as seen in Fig. 2 where the size of the cinecamera frame is indicated by the sides A and F, the size 1,85:1 by the sides B and E, and the size 2,35:1 by the sides C and E.

In order to provide in the negative a photogram of the size according to the invention, a masking means having a suitable width/height ratio is used.

As known, an opening having the size of the photogram is provided in the film guiding passageway facing the lens. The image, which the film is exposed to, passes through said opening.

In order to reduce such opening a masking means is used providing at the present status of art a progressive narrowing of the photogram at the four sides thereof.

In order to achieve the proposed aim this invention provides a masking means narrowing only the height of the photogram and keeping the width unchanged.

Furthermore, according to the invention it is provided:

-reducing the reflex image to the same size of the masking means; and

-optically centering the cinecamera and its lens on the optical centre of the used portion of the photogram, i.e. the centre of the masking means.

A further step consists in the suppression of the sound track during filming in order to enlarge the side portions. Sound track will then be applied during printing.

The advantages of such a motion-picture system are the following:

providing a smaller size than the full-size, which allows a greater sharpening as well as a higher resolving power to be achieved;

providing from one negative the three standard sizes, i.e. 1:1,33; 1:1,66; 1:1,85 by printing by projection optics without any quality loss;

providing likewise the anamorphic size by using anamorphic lenses during printing without any deformation;

providing the transfer from 35 to 70 mm with quality loss of only 25%;

using during filming common lenses, wide-angle lenses of 14 mm, 17 mm a.s.o. as well as any zoom or telephoto lens included, without any deformation also in the transfer to 70 mm.

Another feature of this invention consists only in the suppression of two side bands, thus providing a new size 1:1,50 for TV applications. If it is provided a TV production of the film, the above mentioned framing can be used also during pan shots. Such ratio between sides allows a high optimation of the TV-size to be achieved with a gain to the common size 1:1,33.

## Claims

1. Motion-picture system to be used with 35 mm cinecamera and standard film, characterized in that it provides following step:

a) mounting in the cinecamera a masking means or slide having a particular width/height ratio so as to vertically narrow the photogram and to keep its width unchanged in order to provide a 24,9 mm wide photogram having a reduced height between 13 and 13,5 mm;

b) modifying the size of the reflex view finder so as to provide an image having the same size as the narrowed photogram;

c) marking on the reflex view finder the references relative to the three standard sizes, i.e. 1:1,33; 1:1,66; 1:1,85, and the 1:2,35 anamorphic size as well;

d) optically centering the cinecamera and its lens on the optical centre of the masking means, i.e. the centre of the narrowed portion of photogram defined at a);

e) providing from the negative of the photogram defined at a) all standard size, i.e. 1:1,33; 1:1,66; 1:1,85, during printing by projection optics; and/or

f) providing from the above negative positives of anamorphic size by using anamorphic lenses during printing.

2. The motion-picture system of claim 1, wherein following further steps are provided:

-suppressing the sound track from the negative during filming in order to enlarge the side portions; and

-applying the sound track only during printing.

3. Masking means to be used in the film guiding passageway of a cinecamera and arranged so as to face the lens over the frame opening crossed by the image which the film is exposed to, characterized in that said masking means or slide is adapted to narrow only the height of the photogram of full-size (or super 35), and to keep its width unchanged.

4. The masking means of claim 3, characterized in that it has a width of 24,9 mm and a height in the range between 13 and 13,5 mm.

5. Negative provided by a 35 mm cinecamera having the masking means of claim 4, wherein the taken image is defined by a photogram having a width of 24,9 mm and a height in the range between 13 and 13,5 mm.

## FIG.2

## FIG. 4

TECHNISCOPE
2,35∗1

## FIG. 3

TV 150∗1

## FIG. 1

13,3  19

24,9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | JOURNAL OF THE SMPTE, vol. 82, no. 9, September 1973, pages 742-744; N.D. BERNSTEIN et al.: "A universal format for film production" | 1 | G 03 B  37/00<br>G 03 B   1/48 |
| A | US-A-3 865 738 (M. LENTE)<br>* Columns 3-6; figures 1-8 * | 1 | |
| A | US-A-3 583 803 (A.L. COLE)<br>* Columns 2-4; figures 1-6 * | 1 | |
| A | US-A-3 637 297 (S. YOSHIDA)<br>* Columns 4-13; figures 1-30 * | 1 | |

TECHNICAL FIELDS SEARCHED (Int. Cl.4)

G 03 B  37/00
G 03 B   1/42
G 03 B   1/48
G 03 B   1/50
G 03 B  19/18

The present search report has been drawn up for all claims

| Place of search | Date of completion of the search | Examiner |
|---|---|---|
| THE HAGUE | 21-01-1988 | BOEYKENS J.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)